# EUROPEAN PATENT SPECIFICATION

(11) **EP 1 327 085 B1**
(45) Date of publication and mention of the grant of the patent: **29.09.2004**
(21) Application number: 00974788.2
(22) Date of filing: 17.10.2000
(51) Int. Cl.: F16D 65/12

(54) **A DISK-BRAKE DISK**
BREMSSCHEIBE
DISQUE DE FREIN A DISQUE

(43) Date of publication of application: 16.07.2003
(73) Proprietor: Freni Brembo S.p.A., 24035 Curno, Bergamo (IT)
(72) Inventor: TIRONI, Giovanni, Mario, I-24044 Dalmine (IT); RENZI, Massimiliano, I-20041 Agrate Brianza (IT)
(74) Representative: Maggioni, Claudio
(86) International application number: PCT/IT2000/000418
(87) International publication number: WO 2002/033280

(56) References cited:
- WO-A-00/14424
- DE-A- 1 914 409
- US-A- 3 661 235

## Description

The present invention relates to disk brakes and, more particularly, to a disk-brake disk comprising a bell and an annular braking band connected coaxially to the bell by coupling elements, as defined in the preamble of claim 1 and as known from DE-A-1914409.

A disk brake of the type commonly used as a braking device in motor vehicles comprises an annular metal disk, commonly known as a braking band, which is usually integral with a hub, commonly known as a bell, that can be connected to a wheel of the vehicle, and a caliper which is fixed to the hub carrier, is disposed around the braking band, and is provided with brake linings or pads. The caliper acts on the pads, by means of an hydraulic operation, so as to bring the pads into contact with the two opposed braking surfaces of the braking band. If the wheel and the respective disk composed of the braking band and the bell is rotating, the action of the caliper brings about a braking effect due to the friction between the pads and the braking surfaces of the braking band, with consequent heating of the disk, particularly of the braking band. In order to have an efficient braking device, the braking band must be made of a material which is resistant both to the wear due to the abrasive action of the pads and to high temperatures. It is also advantageous for the braking band to be as light as possible. Since these characteristics are not required of the bell which, in contrast, requires a strong and complex structure, in order to produce high-performance braking devices, the braking band and the bell are produced in two separate parts made of different materials: the braking band is made of light material which is resistant to wear and to high temperatures and the bell is made of a material which has good mechanical characteristics and can be formed into complex geometrical shapes.

The materials which can be used for the manufacture of the braking band are composite materials, for example, carbon/silicon carbide (C/SiC) and those which can be used for the manufacture of the bell are metals such as steel, cast iron, aluminium alloys, titanium, etc. However, although the materials used for the braking band have the required characteristics of resistance both to wear and to high temperatures and a low specific weight, they are quite fragile and their production requires special tooling and particular care. The connection between the braking band and the bell cannot therefore be achieved with the use of conventional coupling means such as pins, screws, etc. Moreover, the different thermal expansion coefficients of the two materials require that the couplings should not bring about excessively rigid radial restraints. To take account of these limitations, the couplings proposed up to now are quite complex and not always reliable.

The main object of the present invention is to provide a disk-brake disk with a simple and reliable coupling between the braking band and the bell.

This object is achieved by the provision of the disk-brake disk defined and characterized in general in Claim 1.

The invention will be understood better from the following detailed description of three embodiments thereof, described by way of non-limiting example with reference to the appended drawings, in which:
Figure 1 is an axonometric view of a disk-brake disk according to the invention, with parts separated,
Figure 2 is an orthogonal view of the disk of Figure 1, with parts separated,
Figures 3a to 3d are three orthogonal views and an axonometric view of an element for coupling between the braking band and the bell,
Figures 4 and 5 are axonometric views of two variants of the disk-brake disk according to the invention, with parts separated,
Figure 4a is an orthogonal view, corresponding to that of Figure 3a, of a coupling element of the disk according to the variants shown in Figures 4 and 5, and
Figure 6 is a cross-section of the disk according to the three embodiments, taken in the plane containing the screws for fixing the braking band to the bell.

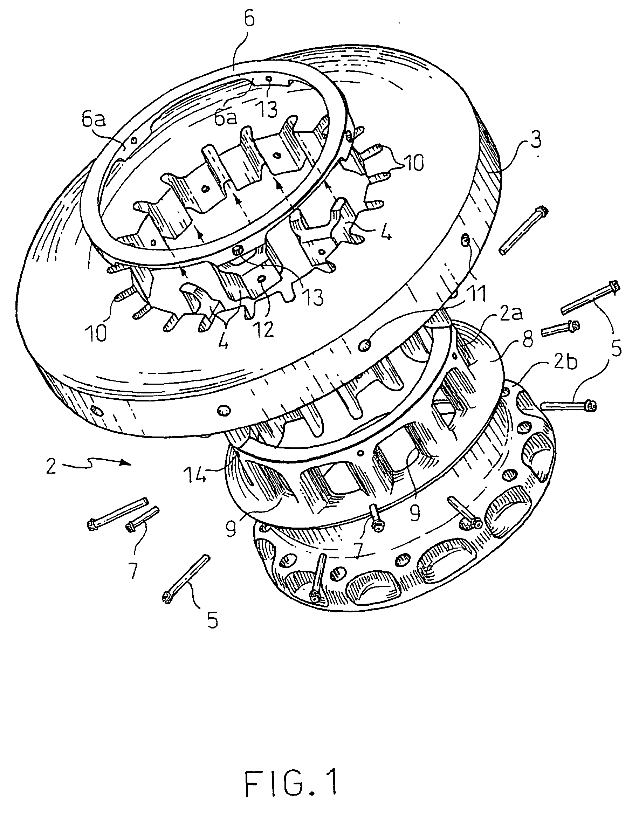

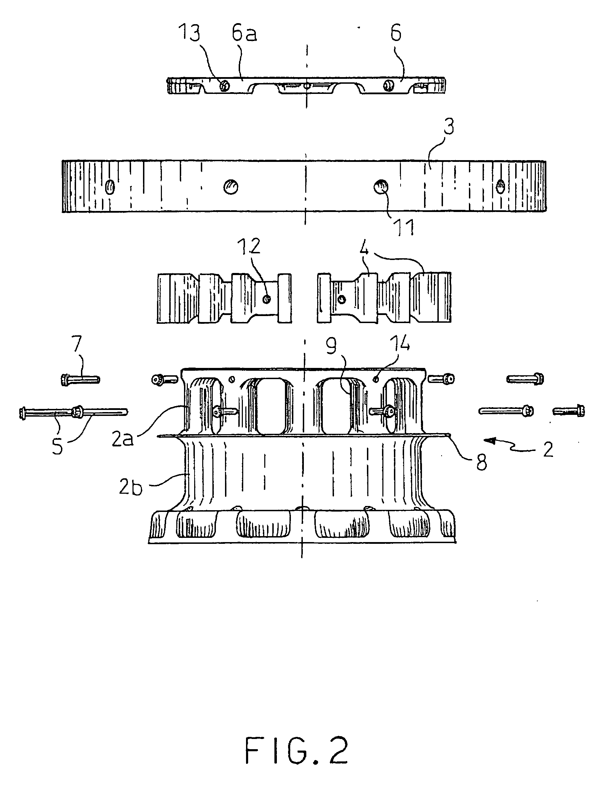

With reference to Figures 1-3 and 6, a disk-brake disk according to the invention comprises a bell 2, an annular braking band 3, a plurality (ten in this embodiment) of coupling elements 4, ten radial fixing screws 5, and an annular plate 6 with fixing screws 7.

Preferably, the bell 2 is made of steel, cast iron, aluminium alloy or titanium, the braking band 3 is formed of a composite material, for example, carbon/silicon carbide, and the plate 6 and the screws 5 and 7 are made of steel or another metal which is resistant to high temperatures.

The bell 2 is divided axially into two portions, indicated 2a and 2b, by an annular projection 8. The portion 2a is substantially cylindrical and has a plurality of uniformly-distributed openings 9; in this embodiment there are ten identical, substantially rectangular through-openings having their longer sides arranged axially relative to the bell and having rounded corners.

The annular braking band 3 has an inner cylindrical surface, which faces the outer cylindrical surface of the bell 2 when the disk is mounted and which has a plurality of identical radial recesses 10 distributed uniformly around its inner surface, the number of recesses being twice the number of openings 9 of the bell 2.

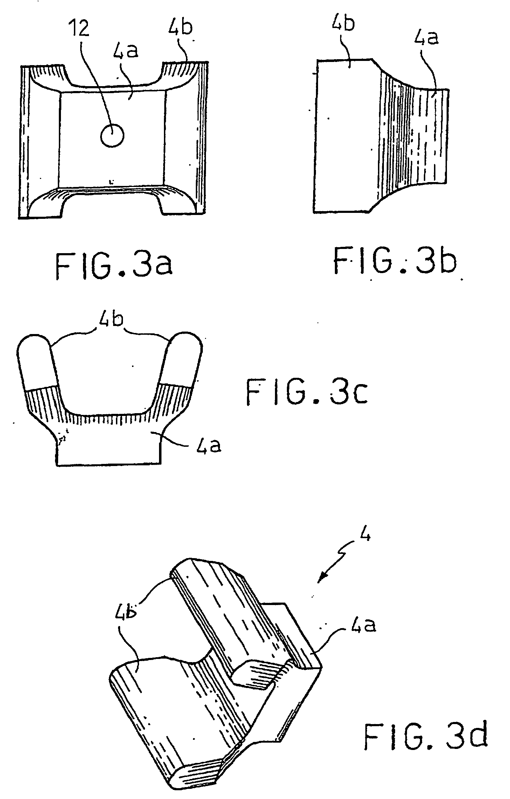

A coupling element 4, preferably made of steel or titanium, is associated with each opening 9 of the bell 2 and with each pair of adjacent recesses 10 of the braking band 3. In particular, as can clearly be seen in Figures 3a-3d, each element 4 has a body 4a of a width substantially equal to the width of an opening 9 so as to fit therein with minimal clearance, and two tabs 4b, integral with the body 4a, having rectangular cross-sections substantially identical to those of the recesses 10 of the braking band and spaced apart in a manner such as to fit in two adjacent recesses 10 of the braking band 3. The axial extent of the tabs is preferably slightly greater than the thickness of the braking band 3. Moreover, in this embodiment, the body 4a of each coupling element 4 is shaped so as to leave two opposed areas of the associated opening free.

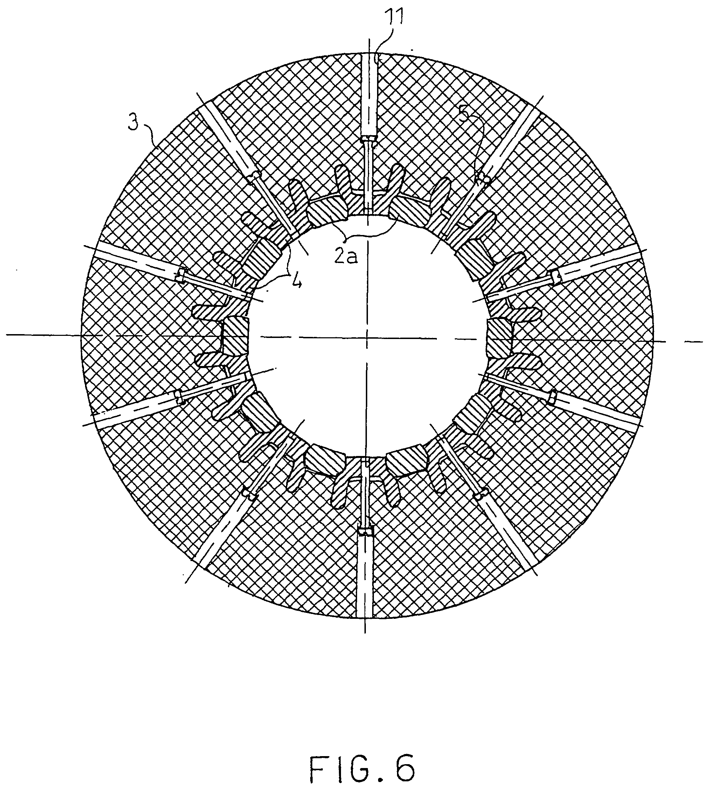

The braking band 3 has a plurality of holes 11 which extend through its entire radial extent and the body 4a of each coupling element 4 has a hole 12, which is preferably a through-hole and which, when the disk is mounted, is in a position coaxial with one of the holes 11 of the braking band 3. As can be seen in Figure 6, each hole 11 has two different diameters so that an abutment ring for the head of a fixing screw 5 is formed inside it. The holes 12 in the coupling elements 4 are threaded with the same pitch as the screws 5.

The annular plate 6 has an inside diameter substantially equal to the outside diameter of the cylindrical portion 2a of the bell 2 and, when the disk is mounted, extends around the end part of the portion 2a of the bell and over the inner edge of the braking band 3, in contact with the head surfaces of the coupling elements 4. The plate has five projections 6a through which holes 13 extend. Corresponding threaded holes 14 are provided in the edge of the portion 2a of the bell 2, preferably halfway between two adjacent openings, for the fixing of the plate 6 to the bell 2 by means of the screws 7.

The disk is assembled by positioning the coupling elements 4 with their bodies 4a in the openings 9 of the bell 2 and with the tabs 4b projecting outwardly, arranging the annular braking band 3 around the bell 2 so that the tabs 4b fit in its radial recesses 10, inserting the radial fixing screws 5 in the radial holes 11 in the braking band 3, and screwing the screws into the threaded holes 12 of the coupling elements 4. The braking band 3 and the bell 2 are thus fixed firmly together. Finally, the annular plate 6 is mounted by being fixed to the bell by means of the screws 7 screwed into the threaded holes 14. The braking band 3 is restrained axially on the bell 2 by the abutment surfaces of the annular projection 8 and of the annular plate 6.

The shape of the plate 6, which is such as to allow air to be conveyed radially, and the fact that the openings 9 are not completely closed by the coupling elements 4 favour the circulation of air, and hence cooling, during the rotation of the disk.

The disk-brake disk having the structure described above can be constructed by simple and inexpensive processes. This applies both to the various metal components and to the annular braking band. The latter can easily be produced in its final form without critical finishing operations. It will be noted, in particular, that, in the disk according to the invention, any manufacturing tolerances of the braking band which, with the use of known coupling techniques, would have prevented precise coupling with the bell or made it very difficult, are taken up by the resilience of the tabs of the coupling elements inserted between the bell and the braking band. In other words, any structural irregularities of the braking band do not lead to risks of cracks or breakage of the braking band during tangential mechanical stresses because the tabs of the coupling elements are capable of a certain amount of resilient deformation which is favoured by the absence of sharp corners in contact with the bell; the distribution of the loads transmitted by a braking operation is therefore substantially uniform. Moreover, as is clear from the foregoing description, assembly is particularly quick and easy.

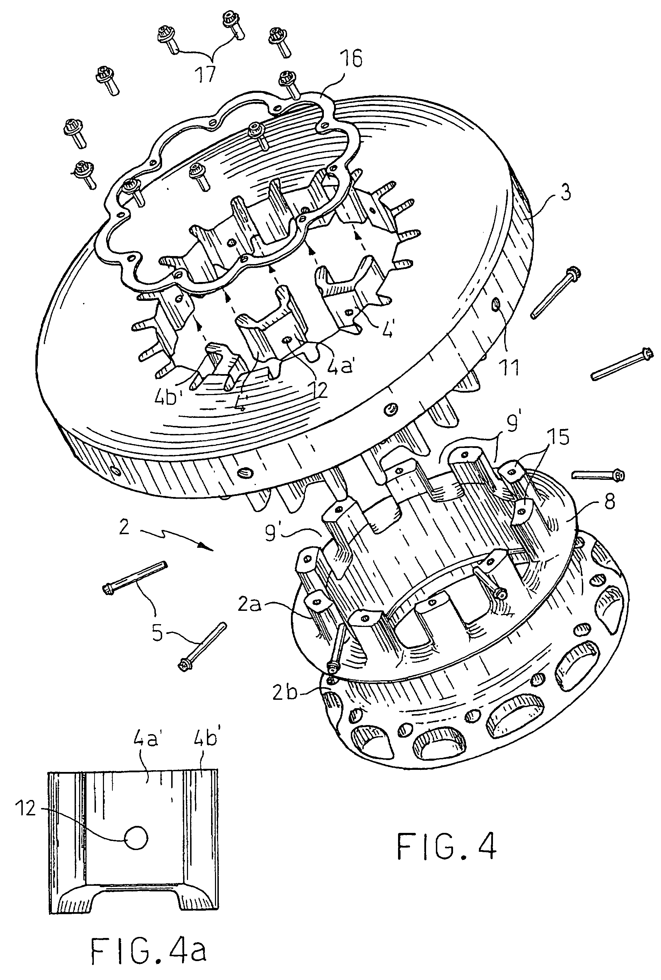

The embodiment of the invention shown in Figure 4 differs from that of Figures 1 to 3 in that the openings in the cylindrical portion 2a of the bell 2, which are indicated 9' in this embodiment, extend as far as the head end of the portion 2a, thus defining between them a plurality of projections 15 which extend axially from the annular projection 8. The axial extent of the openings 9' is substantially equal to the thickness of the braking band 3, or to the axial extent of the tabs of the coupling elements. The coupling elements, which are indicated 4' in this embodiment, also differ slightly from those of the embodiment of Figures 1 to 3 since the body 4a' thereof has a greater axial extent such that its upper surface (as seen in Figure 4) lies in the same plane as the head surfaces of the tabs, which are indicated 4b' in this embodiment, as shown in Figure 4a. The braking band 3 is restrained axially, on one side, by the annular projection 8 and, on the other side, by a stop device in the form of an annular metal plate 16 fixed to the axial projections 15 by means of screws or rivets 17. The annular plate 16 is shaped in a manner such that, when the disk is mounted, the plate 16 is disposed over the inner edge of the braking band 3 and portions of the head surfaces of the tabs 4b'.

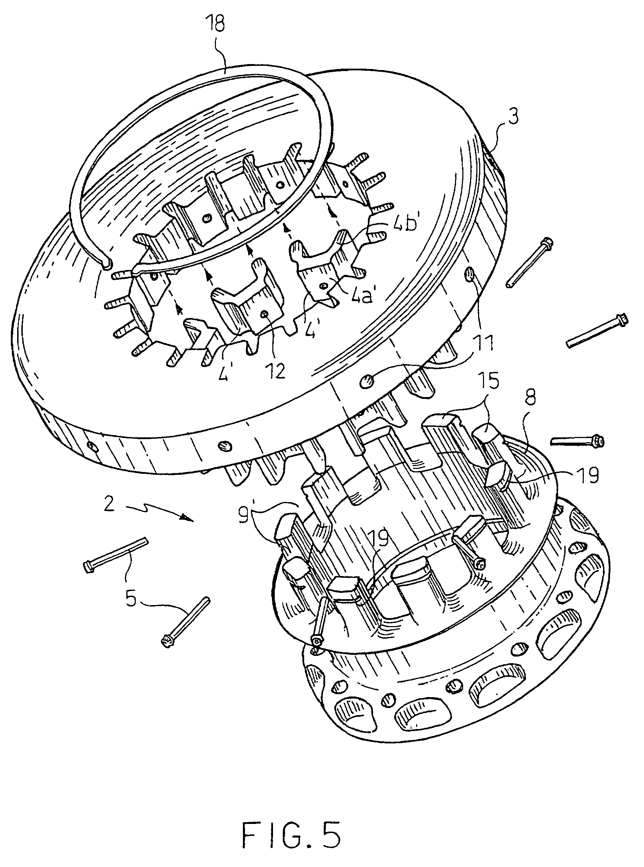

The embodiment of the invention shown in Figure 5 differs from that of Figure 4 solely in that, in addition to the annular projection 8, the braking band 3 is also restrained axially by a resilient "Seger" ring 18, snap-engaged in a seat formed by grooves 19 in the projections 15 in the vicinity of their free ends. In this embodiment, if the braking band has the same thickness as that of Figure 4, the axial dimension of the openings 9' is greater than that of the openings of the bell of Figure 4 by an amount such as to permit the formation of the grooves 19.

Although only three embodiments of the invention have been described and illustrated, it is clear that many variants are possible within the scope of the same inventive concept. For example, the peripheral openings of the bell may not be through holes as the openings shown in the drawings, but may be recesses for constituting the seats for the bodies of the coupling elements, the coupling elements may have only one tab projecting from the body, or more than two tabs, each to be fitted in a corresponding recess of the braking band, the bodies of the coupling elements may be shaped in a manner such as to close the respective openings completely, the openings may not all be identical and may not be distributed uniformly, and the peripheral recesses of the braking band may be different and not distributed uniformly; naturally, in this case, the coupling elements would also have to be different in order to fit the various openings of the bell and the various recesses of the braking band; finally, pins or other connection means may be used instead of fixing screws between the braking band and the coupling elements.

## Claims

1. A disk-brake disk comprising a bell (2) and an annular braking band (3) connected coaxially to the bell by means of coupling elements (4), in which
the braking band (3) has an inner cylindrical surface facing an outer cylindrical surface of the bell (2) and radial recesses (10) which extend from its inner cylindrical surface,
the bell (2) has a plurality of peripheral openings (9; 9') in its outer cylindrical surface, and
the coupling elements (4; 4') have portions (4a, 4b; 4a', 4b') which engage the peripheral openings of the bell (2) and the radial recesses (10) of the braking band (3), **characterized in that** each of the coupling elements (4; 4') comprises a body (4a; 4a') which is fitted in a peripheral opening (9; 9') of the. bell and two tabs (4b; 4b') which are integral with the body (4a; 4a') and are fitted in two radial recesses (10) of the braking band.

2. A disk according to Claim 1 in which the peripheral openings (9; 9') of the bell extend through the entire radial thickness of the bell (2).

3. A disk according to Claim 1 or Claim 2 in which the peripheral openings (9; 9') of the bell are distributed uniformly.

4. A disk according to any one of Claims 1, 2 and 3 in which the peripheral openings (9; 9') of the bell extend axially as far as an end of the bell (2).

5. A disk according to any one of the preceding claims in which the braking band (3) has a plurality of radial holes (11) and each of the coupling elements (4; 4') has a radial hole (12) coaxial with a radial hole (11) of the braking band, and in which pins (5) are inserted in the coaxial radial holes (11; 12) of the braking band (3) and of the coupling elements (4; 4').

6. A disk according to Claim 5 in which the radial holes (12) of the coupling elements (4; 4') are screw-threaded and the pins (5) are constituted by screws having threads matching the threads of the radial holes (12) of the coupling elements.

7. A disk according to any one of the preceding claims comprising axial restraining means (8, 6; 16; 18) between the braking band (3) and the bell (2).

8. A disk according to Claim 7 in which the axial restraining means comprise abutment elements (6, 8; 16; 18) fixed firmly to the bell (2).

9. A disk according to Claim 8 in which the abutment elements comprise an annular projection (8) on the outer cylindrical surface of the bell and a stop device (6; 16; 18).

10. A disk according to Claim 9 in which the stop device comprises an annular plate (6) which extends over an end portion of the outer cylindrical surface of the bell (2) and over an inner edge of the braking band (3).

11. A disk according to Claim 9 in which the stop device comprises a "Seger" ring (18).

12. A disk according to Claim 9 in which the stop device comprises a plate (16) fixed to the bell by screws.

## Patentansprüche

1. Eine Scheibenbremsen-Scheibe, die eine Muffe (2) und ein ringförmiges Bremsband (3), das mittels Kopplungselementen (4) koaxial mit der Muffe verbunden ist, aufweist, wobei
das Bremsband (3) eine zylindrische Innenoberfläche, die einer zylindrischen Außenoberfläche der Muffe (2) zugewandt ist, und radiale Ausnehmungen (10), die sich von seiner zylindrischen Innenoberfläche erstrecken, aufweist,
die Muffe (2) eine Mehrzahl von peripheren Öffnungen (9; 9') in ihrer zylindrischen Außenoberfläche aufweist, und
die Kopplungselemente (4; 4') Abschnitte (4a, 4b; 4a', 4b') aufweisen, die die peripheren Öffnungen der Muffe (2) und die radialen Ausnehmungen (10) des Bremsbandes (3) in Eingriff nehmen,
**dadurch gekennzeichnet, dass**
jedes der Kopplungselemente (4; 4') einen Körper (4a; 4a'), der in eine periphere Öffnung (9; 9') der Muffe eingepasst ist, und zwei Nasen (4b; 4b'), die mit dem Körper (4a; 4a') einstückig sind und in zwei radiale Ausnehmungen (10) des Bremsbandes eingepasst sind, aufweist.

2. Eine Scheibe gemäß Anspruch 1, bei der sich die peripheren Öffnungen (9; 9') der Muffe durch die gesamte radiale Dicke der Muffe (2) erstrecken.

3. Eine Scheibe gemäß Anspruch 1 oder Anspruch 2, bei der die peripheren Öffnungen (9; 9') der Muffe gleichmäßig verteilt sind.

4. Eine Scheibe gemäß einem der Ansprüche 1 bis 3, bei der sich die peripheren Öffnungen (9; 9') der Muffe bis zu einem Ende der Muffe (2) axial erstrecken.

5. Eine Scheibe gemäß einem der vorhergehenden Ansprüche, bei der das Bremsband (3) eine Mehrzahl von radialen Löchern (11) aufweist und jedes der Kopplungselemente (4; 4') ein mit einem radialen Loch (11) des Bremsbandes koaxiales radiales Loch (12) aufweist, und bei der Stifte (5) in die koaxialen radialen Löcher (11; 12) des Bremsbandes (3) und der Kopplungselemente (4; 4') eingeführt sind.

6. Eine Scheibe gemäß Anspruch 5, bei der die radialen Löcher (12) der Kopplungselemente (4; 4') ein Schraubengewinde aufweisen und die Stifte (5) durch Schrauben gebildet sind, deren Gewinde zu den Gewinden der radialen Löcher (12) der Kopplungselemente passen.

7. Eine Scheibe gemäß einem der vorhergehenden Ansprüche, die axiale Rückhalteeinrichtungen (8, 6; 16; 18) zwischen dem Bremsband (3) und der Muffe (2) aufweist.

8. Eine Scheibe gemäß Anspruch 7, bei der die axialen Rückhalteeinrichtungen Anschlagelemente (6, 8; 16; 18) aufweisen, die fest an der Muffe (2) befestigt sind.

9. Eine Scheibe gemäß Anspruch 8, bei der die Anschlagelemente einen ringförmigen Vorsprung (8) auf der zylindrischen Außenoberfläche der Muffe und eine Anschlagvorrichtung (6; 16; 18) aufweisen.

10. Eine Scheibe gemäß Anspruch 9, bei der die Anschlagvorrichtung eine ringförmige Platte (6) aufweist, die sich über einen Endabschnitt der zylindrischen Außenoberfläche der Muffe (2) und über eine Innenkante des Bremsbandes (3) erstreckt.

11. Eine Scheibe gemäß Anspruch 9, bei der die Anschlagvorrichtung einen "Seger"-Ring (18) umfasst.

12. Eine Schreibe gemäß Anspruch 9, bei der die Anschlagvorrichtung eine Platte (16) umfasst, die durch Schrauben an der Muffe befestigt ist.

## Revendications

1. Disque de frein à disque comprenant une cloche (2) et une bande de frein annulaire (3) reliée de façon coaxiale à la cloche au moyen d'éléments d'accouplement (4), dans lequel :
la bande de frein (3) a une surface cylindrique intérieure faisant face à une surface cylindrique extérieure de la cloche (2) et des évidements radiaux (10) qui s'étendent à partir de sa surface cylindrique intérieure,
la cloche (2) a une pluralité d'ouvertures périphériques (9 ; 9') dans sa surface cylindrique extérieure, et
les éléments d'accouplement (4 ; 4') ont des parties (4a, 4b, 4a', 4b') qui viennent en prise avec les ouvertures périphériques de la cloche (2) et les évidements radiaux (10) de la bande de frein (3), **caractérisé en ce que** :
chacun des éléments d'accouplement (4 ; 4') comprend un corps (4a ; 4a') qui est installé dans une ouverture périphérique (9 ; 9) de la cloche et deux pattes (4b ; 4b') qui sont solidaires avec le corps (4a ; 4a) et sont installées dans deux évidements radiaux (10) de la bande de frein.

2. Disque selon la revendication 1, dans lequel les ouvertures périphériques (9 ; 9) de la cloche s'étendent à travers l'épaisseur radiale entière de la cloche (2).

3. Disque selon la revendication 1 ou la revendication 2, dans lequel les ouvertures périphériques (9 ; 9) de la cloche sont distribuées uniformément.

4. Disque selon l'une quelconque des revendications 1, 2 et 3, dans lequel les ouvertures périphériques (9 ; 9) de la cloche s'étendent de façon axiale jusqu'à une extrémité de la cloche (2).

5. Disque selon l'une quelconque des revendications précédentes, dans lequel la bande de frein (3) a une pluralité de trous radiaux (11) et chacun des éléments d'accouplement (4 ; 4) a un trou radial (12) coaxial avec un trou radial (11) de la bande de frein, et dans lequel des goupilles (5) sont insérées dans les trous radiaux coaxiaux (11 ; 12) de la bande de frein (3) et des éléments d'accouplement (4 ; 4).

6. Disque selon la revendication 5, dans lequel les trous radiaux (12) des éléments d'accouplement (4 ; 4') sont filetés et les goupilles (5) sont constituées par des vis ayant des filets correspondant aux filets des trous radiaux (12) des éléments d'accouplement.

7. Disque selon l'une quelconque des revendications précédentes, comprenant des moyens de retenue axiaux (8, 6 ; 16 ; 18) entre la bande de frein (3) et la cloche (2).

8. Disque selon la revendication 7, dans lequel les moyens de retenue axiaux comprennent des éléments de butée (6, 8 ; 16 ; 18) fixés fermement à la cloche (2).

9. Disque selon la revendication 8, dans lequel les éléments de butée comprennent une saillie annulaire (8) sur la surface cylindrique extérieure de la cloche et un dispositif d'arrêt (6 ; 16 ; 18).

10. Disque selon la revendication 9, dans lequel le dispositif d'arrêt comprend une plaque annulaire (6) qui s'étend par-dessus une partie d'extrémité de la surface cylindrique extérieure de la cloche (2) et par-dessus un bord intérieur de la bande de frein (3).

11. Disque selon la revendication 9, dans lequel le dispositif d'arrêt comprend une bague « Seger » (18).

12. Disque selon la revendication 9, dans lequel le dispositif d'arrêt comprend une plaque (16) fixée à la cloche par des vis.
